(19) **Europäisches Patentamt European Patent Office Office européen des brevets**

(11) **EP 4 210 031 B1**

(12) **EUROPEAN PATENT SPECIFICATION**

(45) Date of publication and mention of the grant of the patent:
**24.12.2025 Bulletin 2025/52**

(21) Application number: **20957724.6**

(22) Date of filing: **16.10.2020**

(51) International Patent Classification (IPC):
*H04L 9/08* (2006.01)    *G09C 1/00* (2006.01)

(52) Cooperative Patent Classification (CPC):
**H04L 9/085**

(86) International application number:
**PCT/JP2020/039082**

(87) International publication number:
**WO 2022/079895 (21.04.2022 Gazette 2022/16)**

(54) **SECURE COMPUTATION SYSTEM, SECURE COMPUTATION DEVICE, SECURE COMPUTATION METHOD, AND PROGRAM**

SICHERES BERECHNUNGSSYSTEM, SICHERE BERECHNUNGSVORRICHTUNG, SICHERES BERECHNUNGSVERFAHREN UND PROGRAMM

SYSTÈME DE CALCUL SÉCURISÉ, DISPOSITIF DE CALCUL SÉCURISÉ, PROCÉDÉ DE CALCUL SÉCURISÉ, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.07.2023 Bulletin 2023/28**

(73) Proprietor: **NTT, Inc.**
**Tokyo 100-8116 (JP)**

(72) Inventor: **IKARASHI, Dai**
**Musashino-shi, Tokyo 180-8585 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**WO-A1-2012/046692**

• **DAMGARD IVAN ET AL: "New Primitives for Actively-Secure MPC over Rings with Applications to Private Machine Learning", 2019 IEEE SYMPOSIUM ON SECURITY AND PRIVACY (SP), IEEE, 19 May 2019 (2019-05-19), pages 1102 - 1120, XP033617121, DOI: 10.1109/SP.2019.00078**

• **ABDELRAHAMAN ALY ET AL: "Benchmarking Privacy Preserving Scientific Operations", vol. 20190403:061423, 3 April 2019 (2019-04-03), pages 1 - 21, XP061032034, Retrieved from the Internet <URL:http://eprint.iacr.org/2019/354.pdf> [retrieved on 20190403]**

• **MEHRDAD ALIASGARI ET AL: "Secure Computation on Floating Point Numbers", IACR, INTERNATIONAL ASSOCIATION FOR CRYPTOLOGIC RESEARCH, vol. 20121210:185402, 10 December 2012 (2012-12-10), pages 1 - 31, XP061007014**

• **MEHRDAD ALIASGARI ; MARINA BLANTON ; YIHUA ZHANG ; AARON STEELE: "Secure Computation on Floating Point Numbers", IACR, INTERNATIONAL ASSOCIATION FOR CRYPTOLOGIC RESEARCH, vol. 20121210:185402, 10 December 2012 (2012-12-10), pages 1 - 31, XP061007014**

• **IGARASHI, DAI: "Secure Real Number Operations for Secure A1 - 0(lpl)-Bit Communication and 0(1)-Round Right Shift Protocol", IPSJ SYMPOSIUM SERIES: MULTIMEDIA, DISTRIBUTED, COOPERATIVE, AND MOBILE SYMPOSIUM, IPSJ, JAPAN, 14 October 2019 (2019-10-14), Japan , pages 1557 - 1564, XP009530110, ISSN: 1882-0840**

EP 4 210 031 B1

**Description**

[Technical Field]

The present invention relates to a secure computation technique.

[Background Art]

In secure computation (for example, refer to NPL 1, 2, and the like), it may be necessary to share a numerical value representing a position of an element having a specific value in a sequence of a plurality of elements. For example, in secure computation, in order to shift the most significant bit (most significant bit: MSB) of a bit string to a specific position, it is necessary to share a numerical value representing a position of the most significant bit. NPL 3 implements and benchmarks oblivious algorithms for decision tree and support vector machine (SVM) evaluation.

[Citation List]

[Non Patent Literature]

[NPL 1] Takashi NISHIDE, Takuma AMADA, "Multiparty Computation for Floating Point Arithmetic with Less Communication over Small Fields", IPSJ Journal, Vol. Vol. 60 No. 9, pp. 1433 to 1447 (2019).
[NPL 2] Randmets, J., "Programming Languages for Secure Multiparty Computation Application Development," PhD thesis. University of Tartu (2017).
[NPL 3] DAMGARD IVAN ET AL: "New Primitives for Actively-Secure MPC over Rings with Applications to Private Machine Learning", 2019 IEEE SYMPOSIUM ON SECURITY AND PRIVACY (SP), IEEE, 19 May 2019, pages 1102-1120

[Summary of Invention]

[Problems to be Solved by the Invention]

However, there is no known technique for obtaining a numerical share representing a position of an element having a specific value while the position of the element having the specific value in a sequence of a plurality elements is kept secret from the share of the sequence of the plurality of elements.
The present invention was made in view of these points, and an object of the present invention is to obtain a numerical share representing a position of an element having a specific value while keeping the position of the element having the specific value hidden from the share of a sequence of a plurality of elements.

[Means to Solve the Problems]

The present invention provides a secure computation system, a secure computation apparatus, a secure computation method, and a program, having the features of the respective independent claims. The dependent claims relate to preferred embodiments. The secure computation apparatus obtains the sequence $pof$ obtained by rotating the elements $f_{p-1}, ..., f_0$ of the sequence f by p elements by secure computation using the share of the random number p and the share of the sequence f without obtaining the random number p and the sequence f, obtains the value $b' \in \{0, ..., p-1\}$ representing the position of the element $cf_{b'}$ whose value is $\alpha$ among the elements $cf_{p-1}, ..., cf_0$ in the sequence $pof$, and obtains the share of the value b by secure computation using the share of the random number p and the value b'. Here, p is an integer of 2 or more, f is a sequence of p elements $f_{p-1}, ..., f_0$, a value of one element $f_b$ among the elements $f_{p-1}, ..., f_0$ is $\alpha$, a value of an element other than the element $f_b$ is other than $\alpha$, a value representing a position of the element $f_b$ is $b \in \{0, ..., p-1\}$, and p is a random number represented by an integer. Here, since p is a random number, $pof$ is a randomized position of the element $f_b$ and information b of the position of the element $f_b$ cannot be obtained from $pof$.

[Effects of the Invention]

Thus, in a secure computation apparatus of the present invention, from the share of a sequence of a plurality of elements, it is possible to obtain the share of a numerical value representing a position of an element having a specific value while keeping the position of the element having the specific value concealed in the sequence of the plurality of elements.

[Brief Description of Drawings]

[Fig. 1] Fig. 1 is a conceptual diagram illustrating a configuration of a secure computation system of an embodiment.
[Fig. 2] Fig. 2 is a block diagram illustrating a functional configuration of the secure computation apparatus of the embodiment.
[Fig. 3] Fig. 3 is a flowchart for exemplifying a secure computation method of the embodiment.
[Fig. 4] Fig. 4 is a flowchart for explaining a specific example of a process of Step S13-j.
[Fig. 5] Fig. 5 is a block diagram for exemplifying a hardware configuration of the secure computation apparatus of the embodiment.

[Description of Embodiments]

An embodiment of the present invention will be described below with reference to the drawings.

[Principle]

First, a principle of an embodiment will be described. In the embodiment, n secure computation apparatuses $PA(0), ..., PA(n-1)$ perform secure computation and each obtains a share of a numerical value representing a position of an element $f_b$ having a specific value $\alpha$ from a share (secret sharing value) of a sequence f of a plurality of (p) elements $f_{p-1}, ..., f_0$ while keeping the position of the element $f_b$ having the specific value $\alpha$ concealed among the sequences f of the plurality of elements $f_{p-1}, ..., f_0$. Here, n is an integer of 2 or more, $j=0, ..., n-1$, and p is an integer of 2 or more. For example, p is a prime number (for example, p is a Mersenne prime number such as 61). Furthermore, f is a sequence of p elements $f_{p-1}, ..., f_0$, a value of one element $f_b$ among the elements $f_{p-1}, ..., f_0$ is $\alpha$, a value of an element other than the element $f_b$ is other than $\alpha$, and a value representing the position of the element $f_b$ is $b \in \{0, ..., P-1\}$. Preferably, all the values of the elements other than the element $f_b$ among the elements $f_{p-1}, ..., f_0$ are $\beta$, and $\beta \neq \alpha$. That is to say, preferably, each element $f_i$ (where $i \in \{0, ..., p-1\}$) is binary ($f_i \in \{\alpha, \beta\}$). For example, the sequence f is a bit string, each element $f_i$ of the elements $f_{p-1}, ..., f_0$ is a bit, and the value of each element $f_i$ of the elements $f_{p-1}, ..., f_0$ is 0 or 1. It may be $(\alpha, \beta)=(1,0)$ or $(\alpha, \beta)=(0,1)$. For example, the sequence $f=(f_{p-1}, ..., f_0)$ represents a position b of a specific bit (for example, most significant bit) when an element $A \in Z_P$ (that is, if A is regarded as an integer, A mod P) of a quotient ring $Z_P$ modulo P represented by p bits is expressed in binary and the value of the element $f_b$ corresponding to the position b of the specific bit of the element A is $\alpha=1$, and the value of the other elements is $\beta=0$. For example, p represents the number of bits of P. P is an integer of 1 or more, for example, P is a Mersenne number. An example of P is the Mersenne prime $P=2^p-1$ (for example, $2^{61}-1$). However, these do not limit the invention.
Each secure computation apparatus PA(j) holds p as a parameter. The share $sha(f)_j$ of the sequence $f=(f_{p-1}, ..., f_0)$ of the p elements $f_{p-1}, ..., f_0$ is input to each secure computation apparatus PA(j). For example, the share $sha(f)_j$ of $f=(f_{p-1}, ..., f_0)$ is a sequence of shares $sha(f_{p-1})_j, ..., sha(f_0)j$ of each element $f_{p-1}, ..., f_0$. However, this does not limit the invention. The share $sha(\chi)_j$ of $\chi$ represents the share assigned to the secure computation apparatus PA(j) among the shares (secret sharing value) obtained by secret sharing $\chi$ according to a predetermined secret sharing method. There is no limit to the secret sharing method. Examples of the secret sharing method include (k, n)-secret sharing methods such as (k, n)-replica secret sharing methods (for example, refer to Reference Literature 1) and (k, n)-Shamir secret sharing methods (for example, refer to Reference Literature 2) and (k, k)-additive secret sharing methods. Here, k is an integer of 2 or more and n or less. A (k, n)-duplicate secret sharing method in the case of n=k is called a (k, k)-additive secret sharing method. Furthermore, the share of $\chi$ is expressed as $sha(\chi)_j$ regardless of the type of secret sharing method. For example, the share $sha(\chi_1)_j$ of $\chi_1$ and the share $(\chi_2)_j$ of $\chi_2$ may be based on the same secret sharing method or may be based on different secret sharing methods.
Reference Literature 1: Dai IGARASHI, Hiroki HAMADA, Ryo KIKUCHI, Koji CHIDA, "Improvement of Secure computation Radix Sort Aiming at Statistical Processing of Internet Environment Response 1 Second", SCIS2014, 2014.
Reference Literature 2: A. Shamir, "How to share a secret," Communications of the ACM, Vol. 22, No. 11, pp. 612 to 613, 1979.

<Step S1>

Each secret calculator PA(j) generates a share $sha(\rho)_j$ of a random number p represented by an integer. Preferably, the random number p is a uniform random number, but the random number p does not have to be a uniform random number. For example, a pseudo-random number which can be approximated to a uniform random number may be a random number p. Furthermore, the random number p may or may not be limited to an integer of 0 or more. Each secure computation apparatus PA(j) generates the share $sha(\rho)_j$ without obtaining the value of the random number p itself. For example, at least a part of n secure computation apparatuses PA(0), ... PA(n-1) cooperate to generate the share $sha(\rho)_0$, ..., $sha(\rho)_{n-1}$ of the random number p. The share of the random number $\rho$ $sha(\rho)_0$, ..., $sha(\rho)_{n-1}$ is, for example, a share obtained by secretly sharing the element $\rho \in Z_p$ (that is, if p is regarded as an integer, p mod p) of the quotient ring $Z_p$ modulo p. There is no limitation on the method of generating the shares $sha(\rho)_0$, ..., $Sha(\rho)_{n-1}$. For example, each secure computation apparatus PA(j) of the k secure computation apparatuses PA(0), ..., PA(k-1) may generate a random number $\rho_j$ and each random number $\rho_j$ may be $sha(\rho)_j$ when the share $sha(\rho)_j$ is based on the (k, k)-additive secret sharing method. In this case, $\rho=\rho_0+...+\rho_{k-1}\in Z_p$ (that is, if $\rho$, $\rho_0$, ..., $\rho_{n-1}$ are regarded as integers, $\rho = \rho_0 + ... + \rho_{k-1}$ mod p) is satisfied.. For example, each secure computation apparatus PA(j) of n secure computation apparatuses PA(0), ..., PA(n-1) may generate random numbers $\rho_j$ and a true subset (set of sub-shares) of random numbers $\rho_0$, ..., $\rho_{n-1}$ may be each share $sha(\rho)_j$ when the share $sha(\rho)_j$ conforms to the (k, n)-replica type secret sharing method. In the case of (K, n)-duplicate secret sharing method, $\rho=\rho_0+...+\rho_{n-1}\in Z_p$ is satisfied and all of random numbers $\rho_0$, ..., $\rho_{n-1}$ can be obtained using any k shares of the shares $sha(\rho)_0$, ..., $sha(\rho)_{n-1}$. but no information on p can be obtained from shares less than k.

<Step S2>

Each secure computation apparatus PA(j) obtains a sequence $\rho\circ f=(cf_{p-1}, ..., cf_0)$ in which the elements $f_{p-1}$, ..., $f_0$ of the sequence f are rotated (circularly shifted) by p elements by secure computation using the share $sha(\rho)_j$ of the random number p and the share $sha(f)_j$ of the sequence without obtaining the random number p and the sequence f. For example, each secure computation apparatus PA(j) obtains a sequence pof which is a bit string obtained by bit-rotating the elements $f_{p-1}$, ..., $f_0$ of the sequence f which is a bit string by p bits. Since rotation is a sub-group of permutations, this process can be achieved, for example, by limiting the permutations to rotations by random permutations by secure computation (for example, Reference Literature 3). In addition, since rotation is equivalent to multiplication or division on the quotient ring, it can also be realized by exponentiation, multiplication, division, or the like by secure computation. In this case, the quotient ring method is a Mersenne prime. Reference Literature 3: Hiroki HAMADA, Dai IGARASHI, Koji CHIDA, Katsumi TAKAHASHI, "Random Permutation Protocol for Three-Party Concealed Function Computation", CSS2010 (2010). The rotation of $\chi$ by p elements may cyclically shift $\chi$ to the left by p elements when p is positive, and cyclically shift $\chi$ to the right by p elements when p is negative. On the other hand, when p is positive, $\chi$ may be cyclically shifted to the right by p elements, and when p is negative, $\chi$ may be cyclically shifted to the left by p elements. Here, the sequence pof is a restored value (public value), but each secure computation apparatus PA(j) does not know the random number p itself. Therefore, although it is possible to ascertain the position of the element $cf_{b'}$ (where $b' \in \{0, ..., p-1\}$) whose value is $\alpha$ from the sequence $\rho\circ f=(cf_{p-1}, ..., cf_0)$, each secure computation apparatus PA(j) cannot ascertain which of the elements $f_{p-1}$, ..., $f_0$ in the original sequence f has the value of $\alpha$ (it is not possible to ascertain what number the element with the value of $\alpha$ was). Particularly, when the value of one element $f_b$ among the elements $f_{p-1}$, ..., $f_0$ is $\alpha$, and the values of all the elements other than the element $f_b$ are $\beta$ ($\beta\neq\alpha$), the information obtained from the sequence pof is indistinguishable from the information obtained from any random number. Therefore, higher safety can be ensured.

<Step S3>

Each secure computation apparatus PA (j) obtains a value $b' \in \{0, ..., p-1\}$ representing the position of the element $cf_{b'}$ in which the value is $\alpha$ among the elements $cf_{p-1}$, ..., $cf_0$ in sequence pof. That is to say, each secure computation apparatus PA(j) obtains a value b' which satisfies $cf_{b'}=\alpha$ among the elements $cf_{p-1}$, ..., $cf_0$. b', b, and p satisfy the relationship of $b'=b+\rho\in Z_p$.

<Step S4>

Each secret calculator PA(j) obtains the share $sha(b)_j$ of the value b using the share $sha(\rho)_j$ of the random number p and the value b' on the basis of the relationship of $b'=b+\rho\in Z_p$ by secure computation. For example, when the share $sha(\rho)_j$ and the share $sha(b)_j$ are based on the (k, k)-additive secret sharing method or the (k, n)-replica secret sharing method, each secure computation apparatus PA(j) obtains $sha(b)_j=b'-sha(\rho)_j\in Z_p$ as the share $sha(b)_j$ of the value b.

[First Embodiment]

Next, a first embodiment of the present invention will be described below with reference to the drawings. The following example will be described in the first embodiment.

· P is a prime number. For example, P is a Mersenne prime number (for example, $P=2^{61}-1$).

· p is the number of bits of P. When P is a Mersenne prime number, p is also a prime number (for example, p=61).

· The sequence f is a bit string of length p (p-dimensional vector $(f_{p-1}, ..., f_0)$) having 0 or 1 bits in each element $f_{p-1}, ..., f_0$.

· The value of one element $f_b$ among the elements $f_{p-1}, ..., f_0$ is $\alpha=1$ and the values of all the elements other than the element $f_b$ are $\beta=0$.

For example, the sequence $f=(f_{p-1}, ..., f_0)$ represents the position of the most significant bit of $A \in Z_P$ represented by the p bit and the value of the element $f_b$ corresponding to the position b of the most significant bit is $\alpha=1$ and the value of the other elements is $\beta=0$. Furthermore, in the embodiment, the share obtained by secret-sharing $x \in Z_y$ (x mod y when x is regarded as an integer) according to the (k, n)-secret sharing method is expressed as $[x]^y$, the share obtained by secret-sharing $x \in Z_y$ according to the (k, k)-additive secret-sharing method is expressed as $<x>^y$, and the share obtained by secret-sharing $x \in Z_y$ according to the (k, n)-duplicate secret-sharing method is expressed as $<<x>>y$. Furthermore, $[x]^y$ assigned to the secure computation apparatus PA(j) is expressed as $[x]_j^y$, $<x>^y$ assigned to the secure computation apparatus PA(j) is expressed as $<x>_j^y$, and $<<x>>^y$ assigned to the secure computation apparatus PA(j) is expressed as $<<x>>_j^y$.

<Configuration>

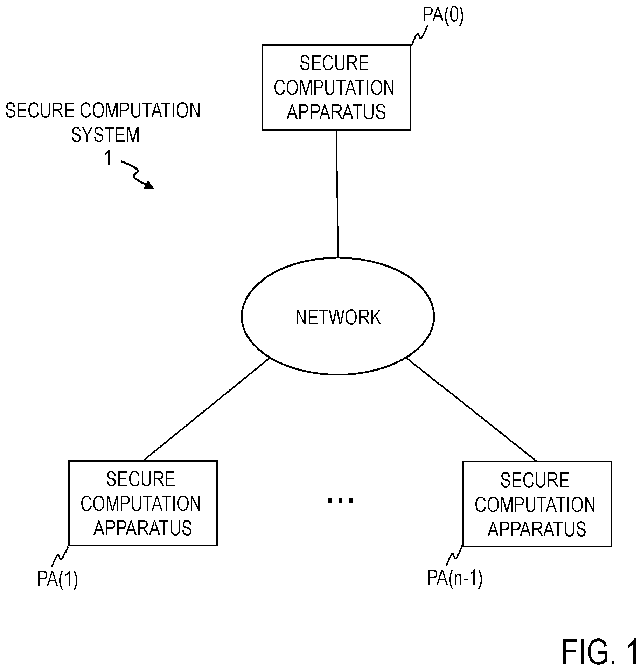

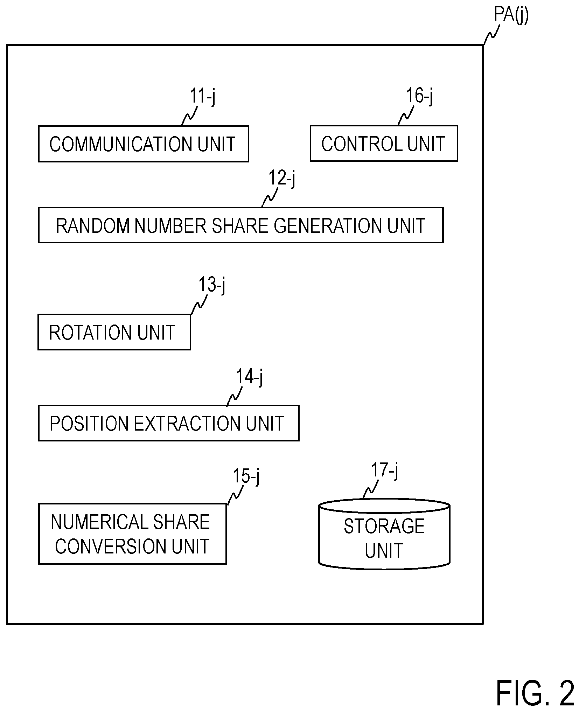

As illustrated in Fig. 1, a secure computation system 1 of the embodiment has n secure computation apparatuses PA(0), ..., PA(n-1). The secure computation apparatuses PA(0), ..., PA(n-1) are configured so that data can be exchanged. In this embodiment, the secure computation apparatuses PA(0), ..., PA(n-1) are configured to be capable of communication via a network and an example of exchanging data via a network will be described. However, this does not limit the present invention and the secure computation apparatuses PA(0), ..., PA(n-1) may be configured so that data can be exchanged via a portable recording medium and data may be exchanged via a portable recording medium. As illustrated in Fig. 2, the secure computation apparatus PA(j) of the embodiment has a communication unit 11-j, a random number share generation unit 12-j, a rotation unit 13-j, a position extraction unit 14-j, a numerical share conversion unit 15-j, a control unit 16-j, and a storage unit 17-j. The secure computation apparatus PA(j) performs each process under the control of the control unit 16-j. The data used in each process and the data obtained in each process are stored in the storage unit 17-j, read out as necessary, and used in each process. The bit number p of P is stored as a parameter in the storage unit 17-j. Furthermore, data is exchanged between the secure computation apparatuses PA(0), ..., PA(n-1) through each communication unit 11-j.

<Process>

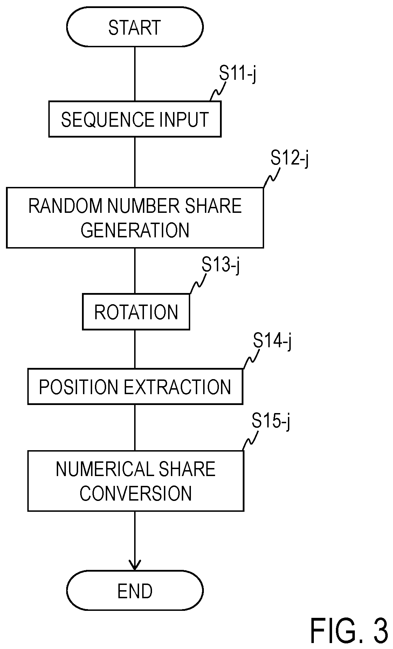

A process of each secure computation apparatus PA(j) will be described below with reference to Fig. 3. The bit share vector $[f]_j^2$, which is the share of the sequence $f=(f_{p-1}, ..., f_0)$, is input to the communication unit 11-j. The bit share vector $[f]_j^2$ is, for example, a sequence of shares $[f_{p-1}]_j^2, ..., [f_0]_j^2$ of each element $f_{p-1}, ..., f_0$ (step S11-j).

The random number share generation unit 12-j uses p read from the storage unit 17-j and generates and outputs a share $<<\rho>>_j^p$ of a random number (for example, a uniform random number) p in cooperation with at least a part of the random number share generator 12-m of another secure computation apparatus $PA_m$ (where $m \in \{0, ..., n-1\}$ and $m \neq j$) (step S12-j).

The rotation unit 13-j obtains and outputs the sequence $\rho \circ f=(cf_{p-1}, ..., cf_0)$ obtained by rotating the elements $f_{p-1}, ..., f_0$ of the sequence f by p elements (bit rotation by p bits) by secure computation using the bit share vector $[f]_j^2$ input in Step S11-j and the share $<<\rho>>_j^p$ of the random number p obtained in Step S12-j without obtaining the random number p and the sequence f. For example, the sequence pof when p is positive is the sequence f cyclically shifted to the left by the p element, and when p is negative, the sequence pof is the sequence f cyclically shifted to the right by the p element. A specific example of this process will be described later (Step S13-j).

The position extraction unit 14-j uses the sequence $\rho \circ f=(cf_{p-1}, ..., cf_0)$ obtained in Step S13-j and obtains and outputs a value $b' \in \{0, ..., P-1\}$ representing the position of the element $cf_{b'}$ whose value is $\alpha=1$ (Step S14-j) among the elements $cf_{p-1}, ..., cf_0$ in sequence pof.

The numerical share conversion unit 15-j calculates $<<p>>_j^p=b'-<<\rho>>_j^p \in Z_p$ by secure computation using the p read from the storage unit 17-j, the share of random number p obtained in Step S12-j $<<\rho>>_j^p$, and the value b' obtained in Step S14-j and outputs the obtained share $<<p>>_j^p$ (Step S15-j).

<Specific example of process of Step S13-j>

The process of Step S13-j can be realized by using random permutation by secure computation (for example, refer to Reference Literature 3). A specific example of this process is shown below.

<<Specific Example 1>>

Specific example 1 is an example in the case of n=3 and k=2.

1: The rotation unit 13-0 of the secure computation apparatus PA(0) and the rotation unit 13-1 of the secure computation apparatus PA(1) cooperate with each other and the bit share vector $[f]_0^2$ and the bit share vector $[f]_1^2$ are converted into the share $<f>_0^2$ and the share $<f>_1^2$ according to the (2,2)-additive secret sharing method (for example, refer to Reference Literature 4 and the like). That is to say, $f=<f>_0^2+<f>_1^2$ is satisfied. The share $<f>_0^2$ is assigned to the secure computation apparatus PA(0), and the share $<f>_1^2$ is assigned to the secure computation apparatus PA(1).

Reference Literature 4: Kikuchi, R., Ikarashi, D., Matsuda, T., Hamada, K. and Chida, K., "Efficient Bit-Decomposition and Modulus-Conversion Protocols with an Honest Majority," Information Security and Privacy -23rd Australasian Conference, ACISP 2018, Wollongong, NSW, Australia, July 11-13, 2018, Proceedings (Susilo, W. and Yang, G., eds.), Lecture Notes in Computer Science, Vol. 10946, Springer, pp. 64-82 (online), DOI: 10.1007/978-3-319-93638-3 5 (2018).

2: The rotation unit 13-0 of the secure computation apparatus PA(0) and the rotation unit 13-1 of the secure computation apparatus PA(1) shares the sequence $r_{01}=(r_{01,\ p-1}, ..., r_{01,\ 0})$ of the random number elements $r_{01,\ p-1}, ..., r_{01,\ 0}$. For example, the rotation unit 13-0 may randomly generate the sequence $r_{01}$ and send it to the rotation unit 13-1, the rotation units 13-0 and 13-1 may share the seed value in advance, and may share the same sequence $r_{01}$ by a predetermined process using the seed value.

3: The rotation unit 13-0 of the secure computation apparatus PA(0) calculates $B_0=(\rho_{01})\circ<f>_0^2-r_{01}$ using the share $<<\rho>>_0^p$, the share $<f>_0^2$, and the sequence $r_{01}$ and transmit it to the rotation unit 13-2 of the secure computation apparatus $PA_2$. Here, the following relationship is satisfied.

$$<<\rho>>_0{}^p=(\rho_{01},\quad \rho_{20})$$

$$<<\rho>>_1{}^p=(\rho_{01},\quad \rho_{12})$$

$$<<\rho>>_2{}^p=(\rho_{12},\quad \rho_{20})$$

$$\rho=\rho_{01}+\rho_{12}+\rho_{20}\in Z_p$$

$\rho$, $\rho_{01}$, $\rho_{20}$, and $\rho_{12}$ are the elements of the quotient ring modulo p and the operation of $\rho$, $\rho_{01}$, $\rho_{20}$, and $\rho_{12}$, and the operation of the share of $\rho$, $\rho_{01}$, $\rho_{20}$, and $\rho_{12}$ are operations on the quotient ring $Z_p$ modulo p (operation on mod p).

4: The rotation unit 13-1 of the secure computation apparatus PA(1) calculates $B_1=(\rho_{01})\circ<f>_1^2+r_{01}$ using the share $<<\rho>>_1{}^p$, the share $<f>_1^2$, and the sequence $r_{01}$ and transmits it to the rotation unit 13-2 of the secure computation apparatus $PA_2$.

5: The rotation unit 13-2 of the secure computation apparatus $PA_2$ calculates $C=(\rho_{20})\circ((\rho_{12})\circ(B_0+B_1))$ using the share $<<\rho>>_2{}^p$, the share $<f>_2^2$, $B_0$, and $B_1$. Here, the following holds.

$$C=(\rho_{20})\circ((\rho_{12})\circ(B_0+B_1))$$

$$=(\rho_{20})\circ((\rho_{12})\circ((\rho_{01})\circ<f>_0{}^2-r_{01}+(\rho_{01})\circ<f>_1{}^2+r_{01}))$$

$$=(\rho_{20})\circ((\rho_{12})\circ((\rho_{01})\circ(<f>_0{}^2+<f>_1{}^2)))$$

$$=(\rho_{20})\circ((\rho_{12})\circ((\rho_{01})\circ f)$$

$$=(\rho_{20}+\rho_{12}+\rho_{01})\circ f$$

$$=\rho\circ f$$

<<Specific Example 2>>

Specific Example 2 is an example in which n and k are generalized. In Specific Example 2, the set of n secure computation apparatuses PA(0), ..., PA(n-1) is expressed as PA and the set of k secure computation apparatuses PA($\varphi$(i, 0)), ..., PA($\varphi$(i, k-1)) selected from PA is referred to as SP(i). Here, n and k are integers of 2 or more, n>k, N=$_n$C$_k$, and i=0, ..., N-1. $_n$C$_k$ represents the total number of combinations when selecting k different from each other from n different from each other. Furthermore, $\varphi$ ($\alpha$, $\beta$) is a function value of $\alpha$ and $\beta$, and satisfies {$\varphi$ (i, 0), ..., $\varphi$ (i, k-1)}$\subset$\{0, ..., n-1\}. SP(0), ..., SP(N-1) are different from each other, and SP(0), ..., SP(N-1) is configured as |SP (i')$\cap$SP(I'+ 1)$^c$|=1 about i'=0, ..., N-2. Here, $\alpha$c represents the complement of $\alpha$, and |$\alpha$| represents the number of elements of $\alpha$. That is to say, the set SP(i') is a set in which only one secure computation apparatus is different from the set SP(i'+ 1).

The share <f>$_{(SP(i))}$ is k shares held by the set SP(i) according to the (k, k)-additive secret sharing method. In addition, particularly, the share <f>$_{(SP(0))}$ is k shares <f>$_0{}^p$, ..., <f>$_{k-1}{}^p$ obtained by secret sharing f according to the (k, k)-additive secret sharing method. <f>$_{(PA(\theta)\in SP(i))}$ is a share among the share <f>$_{(SP(i))}$ held by the secure computation apparatus PA($\theta$)$\in$SP(i).

The sub-share of n shares <<$\rho$>>$_0{}^p$, ..., <<$\rho$>>$_{n-1}{}^p$ obtained by secretly sharing p according to the (k, n)-duplicate secret sharing method is expressed as $\rho_0$, ..., $\rho_{n-1}\in Z_p$. That is to say, $\rho$=$\rho_0$+ ... +$\rho_{n-1}\in Z_p$ (that is, p=po+ ... +$\rho_{n-1}$ mod p) is satisfied. The sub-share of the sub-shares $\rho_0$, ..., $\rho_{n-1}$ corresponding to the set SP(i) is expressed as $\rho_{(SP(i))}$. That is to say, $\rho_{(SP(i))}$ represents a sub-share included in the share <<$\rho$>>$_{(\varphi (i, 0))^p}$, ..., <<$\rho$>>$_{(\varphi(i, k-1))^p}$ corresponding to k secure computation apparatuses PA($\varphi$ (i, 0)), ..., PA($\varphi$ (i, k-1)) belonging to the set SP(i).

As described above, for i'=0, ..., N-2, SP(0), ..., SP(N-1) is configured so that |SP(i')$\cap$SP(i'+1)$^c$|=1 is satisfied. Here, PA($\varphi$(i', 0)) represents a secure computation apparatus included in the set SP (i') and not included in the set SP(i'+ 1). Furthermore, PA($\varphi$(i'+ 1, k)) represents a secure computation apparatus not included in the set SP(i') but included in the set SP(i'+1). Furthermore, the PA($\varphi$(i', j)) for j=1, ..., K-1 represents a secure computation apparatus included in both the set SP(i') and the set SP(i'+1).

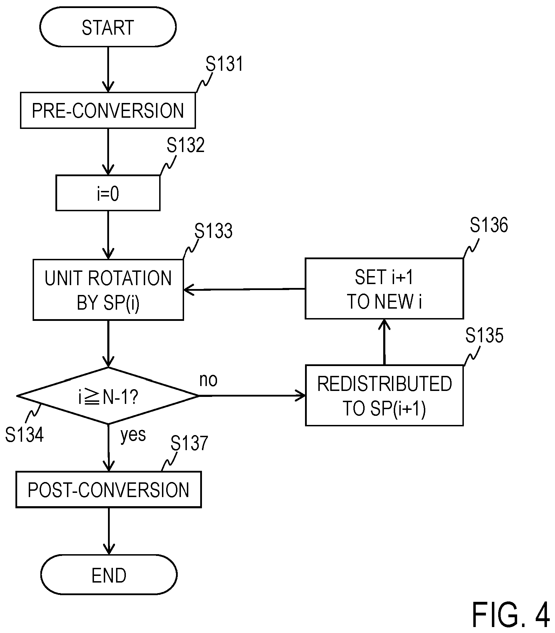

Specific Example 2 of Step S13-j will be described with reference to Fig. 4. Rotation units 13-$\varphi$(0,0), ..., 12-$\varphi$(0, k-1)) of k secure computation apparatuses PA($\varphi$(0,0)), ..., PA($\varphi$(0, k-1)) belonging to the set SP(0) convert bit share vectors [f]$_{\varphi(0,0)}$, ..., [f]$_{\varphi(0, k-1)}$, which are the shares held by the set SP(0) into shares <f>$_0$, ..., <f>$_{k-1}$ obtained by secretly sharing f (share <f>$_{(SP(0))}$) in accordance with the (k,k)-additive secret sharing method. The share <f>$_\theta$ is stored in a storage unit 17-$\theta$ of the secure computation apparatus PA($\theta$)($\theta\in\{\varphi$(0, 0), ..., $\varphi$(0, k-1)\}) belonging to the set SP(0) (Step S131).

The control units 16-j of all the secure computation apparatuses PA(j) are set to i=0 (Step S132).

Rotational units 13-$\varphi$(i, 0), ..., PA($\varphi$(i, k-1)) of k secure computation apparatuses PA($\varphi$(i, 0)), ..., PA($\varphi$(i, k-1)) belonging to the set SP(i) calculates (performs unit rotation on ) $\rho_{(SP(i))}\circ$<f>$_{(SP(i))}\in Z_P$ and stores a value obtained thereby as a new share <f>$_{(SP(i))}$ in the storage unit 17-$\varphi$(i, 0), ..., $\varphi$(i, k-1) (Step S133).

The control unit 16-j determines whether i$\geq$N-1 is satisfied (Step S134). When i$\geq$N-1 is satisfied, the process proceeds to Step S137, and when i$\geq$N-1 is satisfied, the process proceeds to Step S135.

In Step S135, first, the rotation unit 13-$\varphi$(i, 0) of the secure computation apparatus PA($\varphi$ (i, 0)) and the rotation unit 13-$\varphi$(i, 1), ..., 13-$\varphi$(i, k-1) of the secure computation apparatus PA($\varphi$ (i, 1)), ..., PA($\varphi$ (i, k-1)) share random numbers r(i, 1), ..., r(i, k-1))$\in Z_p$. Furthermore, the rotation unit 13-$\varphi$(i, 0) of the secure computation unit PA($\varphi$ (i, 0)) uses a share <f>$_{(PA(0)\in SP(i))}$ and random numbers r(i, 1), ..., r(i, k-1)) to obtain the share <f>$_{(PA(k)\in SP(i+1))}$. That is to say, the secure computation apparatus PA($\varphi$(i, 0)) obtains the share <f>$_{(PA(k)\in SP(i+1))}$ using the following Equation.

$$\langle f \rangle_{(PA(k)\in SP(i+1))}$$
$$= \langle f \rangle_{(PA(0)\in SP(i))}$$
$$- \sum_{1\leq j'<k} r(i, j')$$

The secure computation apparatus PA($\varphi$(i, 0)) transmits the share <f>$_{(PA(k)\in SP(i+1))}$ obtained as described above to the secure computation apparatus PA($\varphi$(i+1, k)). Furthermore, the rotation unit 13-$\varphi$(i, j') of the secure computation apparatus PA($\varphi$(i, j')) obtains the share <f>$_{(PA(j')\in SP(i+1))}$ using the share <f>$_{(PA(j')\in SP (i))}$ and the random number r(i, j') for j'=1, ..., k-1. That is to say, each of the rotation units 13-$\varphi$(i, j') of the secure computation apparatus PA($\varphi$(i, j')) has a share <f>$_{(PA(j')\in SP(i+1))}$ using the following Equation (Step S135) .

$$\langle f \rangle_{(PA(j')\in SP(i+1))}$$
$$= \langle f \rangle_{(PA(j')\in SP(i))} + r(i, j')$$

The control unit 16-j of all the secure computation apparatuses PA(j) sets i+1 to a new i (Step S136) and the process proceeds to Step S133.

In Step S137 (when i≥N-1 is satisfied in Step S134), the rotation units 13-φ(N-1, 0), ..., 13-φ(N-1, k-1) of the secure computation apparatus PA(φ(N-1, 0)), ..., PA(φ(N-1, k-1)) belonging to the set SP(N-1) uses the share $<f>_{(SP(N-1))}$ stored in the storage units 17-φ(N-1, 0), ..., φ(N-1, k-1) in Step S133 and obtains the restored value pof in cooperation thereof.

[Hardware Configuration]

The secure computation apparatus PA(j) in the embodiment is, for example, a device composed of a general-purpose or dedicated computer including a processor (hardware processor) such as a central processing unit (CPU) and a memory such as a random access memory (RAM) and a read only memory (ROM) and configured to execute a predetermined program. This computer may have one processor and one memory or may have a plurality of processors and a plurality of memories. This program may be installed in a computer or may be recorded in a ROM or the like in advance. Furthermore, a part or all of the processing units may be configured by using an electronic circuit which realizes a processing function independently, instead of an electronic circuit (circuitry) which realizes a function configuration by reading a program like a CPU. Furthermore, an electronic circuit constituting one device may include a plurality of CPUs.

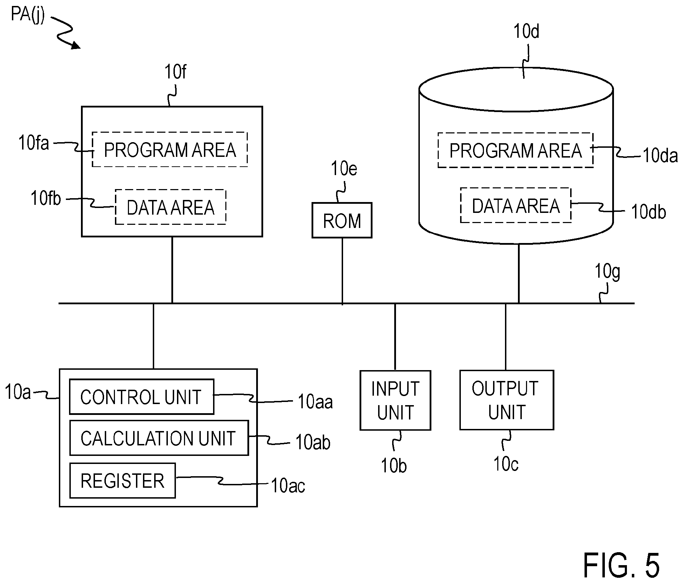

Fig. 5 is a block diagram illustrating a hardware configuration of the secure computation apparatus PA(j) in the embodiment. As illustrated in Fig. 5, the secure computation apparatus PA(j) of this example includes a central processing unit (CPU) 10a, an input unit 10b, an output unit 10c, a random access memory (RAM) 10d, a read only memory (ROM) 10e, an auxiliary storage device 10f, and a bus 10g. The CPU 10a of this example has a control unit 10aa, a calculation unit 10ab, and a register 10ac and executes various arithmetic processes in accordance with various programs read into the register 10ac. Furthermore, the input unit 10b is a communication device into which data is input, an input terminal, a keyboard, a mouse, a touch panel, or the like. Furthermore, the output unit 10c is a communication device from which data is output, an output terminal, a display, or the like. In addition, the RAM 10d is a static random access memory (SRAM), a dynamic random access memory (DRAM), or the like and has a program region 10da in which a predetermined program is stored and a data region 10db in which various data are stored. Moreover, the auxiliary storage device 10f is, for example, a hard disk, a magneto-optical (MO) disc, a semiconductor memory, or the like and has a program region 10fa in which a predetermined program is stored and a data region 10fb in which various data are stored. Furthermore, the bus 10g connects the CPU 10a, the input unit 10b, the output unit 10c, the RAM 10d, the ROM 10e, and the auxiliary storage device 10f so that information can be exchanged. The CPU 10a writes the program stored in the program region 10fa of the auxiliary storage device 10f to the program region 10da of the RAM 10d in accordance with the read operating system (OS) program. Similarly, the CPU 10a writes various data stored in the data region 10fb of the auxiliary storage device 10f to the data region 10db of the RAM 10d. Also, the address on the RAM 10d in which this program or data is written is stored in the register 10ac of the CPU 10a. The control unit 10aa of the CPU 10a sequentially reads out these addresses stored in the register 10ac, reads a program or data from the region on the RAM 10d indicated by the read address, and reads the program or data, causes the calculation unit 10ab to sequentially execute the operations indicated by the program, and stores the calculation result in the register 10ac. With such a configuration, the functional configuration of the secure computation apparatus PA(j) is realized.

The above program can be recorded on a computer-readable recording medium. An example of a computer-readable recording medium is a non-transitory recording medium. Examples of such recording media are magnetic recording devices, optical discs, optomagnetic recording media, semiconductor memories, and the like.

The distribution of this program is performed, for example, by selling, transferring, renting, or the like a portable recording medium such as a DVD or a CD-ROM in which the program is recorded. Furthermore, the program may be stored in the storage device of the server computer and the program may be distributed by transferring the program from the server computer to another computer over a network. As described above, the computer which executes such a program first temporarily stores, for example, the program recorded on the portable recording medium or the program transferred from the server computer in its own storage device. Furthermore, when the process is performed, the computer reads the program stored in its own storage device and performs the process according to the read program. Furthermore, as another execution form of this program, a computer may read the program directly from a portable recording medium and execute processing according to the program and the processing according to the received program may be executed sequentially every time the program is transferred from the server computer to this computer. In addition, the above-mentioned process may be performed by a so-called application service provider (ASP) type service which realizes the processing function only by the execution instruction and result acquisition without transferring the program from the server computer to this computer. Note that the program in this embodiment includes information to be used for processing by a computer and equivalent to the program (data which is not a direct command to the computer but has a property that regulates the processing of the computer and the like).

Although the device is configured by executing a predetermined program on a computer in each embodiment, at least a part of these processing contents may be realized using hardware.

Note that the present invention is not limited to the above-described embodiment. For example, the various processes described above may not only be executed in chronological order according to the description, but may also be executed in parallel or individually as required by the processing capacity of the device that executes the processes.

[Industrial Applicability]

The present invention can be used, for example, for secret calculations using shares. For example, in a secret calculation, in order to shift the most significant bit of a bit string to a specific position, it may be necessary to share a numerical value representing the position of the most significant bit. It is possible to obtain a numerical share which represents the position of the element with that particular value while keeping the position of the element having the specific value secret from the share of the column of the plurality of elements having the specific value in the element at the most significant bit position by using the present invention.

[Reference Signs List]

    1 Secure computation system
    PA(j) Secure computation apparatus
    12-j Random number share generation unit
    13-j Rotation unit
    14-j Position extraction unit
    15-j Numerical share conversion unit

**Claims**

1.  A secure computation system (1) in which n is an integer of 2 or more, j=0, ..., n-1, p is an integer of 2 or more, f is a sequence of p elements $f_{p-1}$, ..., $f_0$, a value of one element $f_b$ among elements $f_{p-1}$, ..., $f_0$ is $\alpha$, a value of an element other than the element $f_b$ is other than $\alpha$, a value representing a position of the element $f_b$ is $b \in \{0, ..., p-1\}$, p is a random number represented by an integer, the system (1) comprising:

    n secure computation apparatuses PA(0), ..., PA(n-1), wherein the secure computation apparatus PA(j) includes a rotation unit (13-j) which obtains a sequence pof by rotating the elements $f_{p-1}$, ..., $f_0$ of the sequence f by p elements by secure computation using a share of the random number p and a share of the sequence f without obtaining the random number p and the sequence f,
    a position extraction unit (14-j) which obtains a value b'E{0, ..., p-1} representing a position of an element $cf_{b'}$ whose value is $\alpha$ among the elements $cf_{p-1}$, ..., $cf_0$ in the sequence pof, and
    a numerical share conversion unit (15-j) which obtains a share of the value b by secure computation using the share of the random number p and the value b', wherein a share of $\chi$ represents a share assigned to the secure computation apparatus PA(j) among shares obtained by secret sharing $\chi$ according to a predetermined secret sharing method.

2.  A secure computation apparatus (PA(j)) in which p is an integer of 2 or more, f is a sequence of p elements $f_{p-1}$, ..., $f_0$, a value of one element $f_b$ among elements $f_{p-1}$, ..., $f_0$ is $\alpha$, a value of an element other than the element $f_b$ is a value other than $\alpha$, a value representing a position of the element $f_b$ is $b \in \{0, ..., p-1\}$, p is a random number represented by an integer, the secure computation apparatus (PA(j)) comprising:

    a rotation unit (13-j) which obtains the sequence pof by rotating the elements $f_{p-1}$, ..., $f_0$ in the sequence f by p elements by secure computation using a share of the random number $\rho$ and a share of the sequence f without obtaining the random number p and the sequence f,
    a position extraction unit (14-j) which obtains a value b'E{0, ..., p-1} representing a position of an element $cf_{b'}$ in which the value is $\alpha$ among the elements $cf_{p-1}$, ..., $Cf_0$ in the sequence pof, and
    a numerical share conversion unit (15-j) which obtains a share of the value b by secure computation using the share of the random number p and the value b', wherein a share of $\chi$ represents a share assigned to the secure computation apparatus (PA(j)) among shares obtained by secret sharing $\chi$ according to a predetermined secret sharing method.

3.  The secure computation apparatus (PA(j)) according to claim 2, wherein

all values of the elements $f_{p-1}$, ..., $f_0$ other than the element $f_b$ are $\beta$ and $\beta \neq \alpha$ is satisfied.

4. The secure computation apparatus (PA(j)) according to claim 3, wherein

$i \in \{0, ..., p-1\}$ is satisfied, a sequence f is a bit string, a value of each element $f_i$ of the elements $f_{p-1}$, ..., $f_0$ is 0 or 1, $(\alpha, \beta)=(1,0)$ or $(\alpha, \beta)=(0,1)$ is satisfied, the random number p is an element of a quotient ring $Z_p$ modulo p, the share of the random number p is a share $sha(\rho)_j$ obtained by secretly sharing $\rho \in Z_p$,
the rotation unit (13-j) obtains the sequence pof, which is a bit string obtained by bit-rotating the elements $f_{p-1}$, ..., $f_0$ in the sequence f by p bits,
the $sha(\rho)_j$ and the $sha(b)_j$ are shares obtained by secret sharing according to an additive secret sharing method or a duplicate secret sharing method, and
the numerical share conversion unit (15-j) obtains $b'-sha(\rho)_j \in Z_p$ as the share $sha(b)_j$ of the value b.

5. The secure computation apparatus (PA(j)) according to any one of claims 2 to 4, wherein the random number p is a uniform random number.

6. A secure computation method implemented by a secure computation apparatus, in which p is an integer of 2 or more, f is a sequence of p elements $f_{p-1}$, ..., $f_0$, a value of one element $f_b$ among elements $f_{p-1}$, ..., $f_0$ is $\alpha$, a value of an element other than the element $f_b$ is a value other than $\alpha$, a value representing a position of the element $f_b$ is $b \in \{0, ..., p-1\}$, p is a random number represented by an integer, the secure computation method comprising:

a rotation step (S13-j) of obtaining a sequence pof by rotating the elements $f_{p-1}$, ..., $f_0$ in the sequence f by p elements by secure computation using a share of the random number $\rho$ and a share of the sequence f without obtaining the random number p and the sequence f;
a position extraction step (S14-j) of obtaining a value $b' \in \{0, ..., p-1\}$ representing a position of an element $cf_b$, whose value is $\alpha$ among the elements $cf_{p-1}$, ..., $cf_0$ in the sequence pof; and
a numerical share conversion step (S15-j) of obtaining a share of the value b by secure computation using the share of the random number p and the value b' where a share of $\chi$ represents a share assigned to the secure computation apparatus (PA(j)) among shares obtained by secret sharing $\chi$ according to a predetermined secret sharing method.

7. A program for operating a computer as the secure computation apparatus according to any one of claims 2 to 5.

**Patentansprüche**

1. Sichere-Berechnungs-System (1), in dem n eine ganze Zahl von 2 oder mehr ist, j=0, ..., n-1, p eine ganze Zahl von 2 oder mehr ist, f eine Sequenz von p Elementen $f_{p-1}$, ..., $f_0$ ist, ein Wert eines Elements $f_b$ unter den Elementen $f_{p-1}$, ..., $f_0$ $\alpha$ ist, ein Wert eines anderen Elements als des Elements $f_b$ von $\alpha$ verschieden ist, ein Wert, der eine Position des Elements $f_b$ darstellt, $b \in \{0, ..., p-1\}$ ist, p eine durch eine ganze Zahl dargestellte Zufallszahl ist, wobei das System (1) Folgendes aufweist:
n Sichere-Berechnungs-Vorrichtungen PA(0), ..., PA(n-1), wobei die Sichere-Berechnungs-Vorrichtung PA(j) Folgendes aufweist:

eine Rotationseinheit (13-j), die eine Sequenz pof durch Rotieren der Elemente $f_{p-1}$, ..., $f_0$ der Sequenz f um p Elemente durch sichere Berechnung unter Verwendung eines Anteils der Zufallszahl p und eines Anteils der Sequenz f erhält, ohne die Zufallszahl p und die Sequenz f zu erhalten,
eine Positionsextraktionseinheit (14-j), die einen Wert $b' E \{0, ..., p-1\}$ erhält, der eine Position eines Elements $cf_b$, darstellt, dessen Wert $\alpha$ unter den Elementen $cf_{p-1}$, ..., $cf_0$ in der Sequenz pof ist, und
eine numerische Anteilsumwandlungseinheit (15-j), die einen Anteil des Werts b durch sichere Berechnung unter Verwendung des Anteils der Zufallszahl p und des Werts b' erhält, wobei ein Anteil von $\chi$ einen Anteil darstellt, welcher der Sichere-Berechnungs-Vorrichtung PA(j) unter Anteilen zugewiesen ist, die durch geheimes Teilen $\chi$ gemäß einem vorbestimmten Geheimteilungsverfahren erhalten werden.

2. Sichere-Berechnungs-Vorrichtung (PA(j)), in der p eine ganze Zahl von 2 oder mehr ist, f eine Sequenz von p Elementen $f_{p-1}$, ..., $f_0$ ist, ein Wert eines Elements $f_b$ unter den Elementen $f_{p-1}$, ..., $f_0$ $\alpha$ ist, ein Wert eines anderen Elements als des Elements $f_b$ von $\alpha$ verschieden ist, ein Wert, der eine Position des Elements $f_b$ darstellt, $b \in \{0, ..., p-1\}$ ist, p eine durch eine ganze Zahl dargestellte Zufallszahl ist, wobei die Sichere-Berechnungs-Vorrichtung (PA(j))

Folgendes aufweist:

eine Rotationseinheit (13-j), die die Sequenz pof durch Rotieren der Elemente $f_{p-1}$, ..., $f_0$ in der Sequenz f um p Elemente durch sichere Berechnung unter Verwendung eines Anteils der Zufallszahl p und eines Anteils der Sequenz f erhält, ohne die Zufallszahl p und die Sequenz f zu erhalten,
eine Positionsextraktionseinheit (14-j), die einen Wert $b' \in \{0, ..., p-1\}$ erhält, der eine Position eines Elements $cf_{b'}$ darstellt, in dem der Wert $\alpha$ unter den Elementen $cf_{p-1}$, ..., $Cf_0$ in der Sequenz pof ist, und
eine numerische Anteilsumwandlungseinheit (15-j), die einen Anteil des Werts b durch sichere Berechnung unter Verwendung des Anteils der Zufallszahl p und des Werts b' erhält, wobei ein Anteil von $\chi$ einen Anteil darstellt, welcher der Sichere-Berechnungs-Vorrichtung (PA(j)) unter Anteilen zugewiesen ist, die durch Geheimnisteilung $\chi$ gemäß einem vorbestimmten Geheimnisteilungsverfahren erhalten werden.

3. Sichere-Berechnungs-Vorrichtung (PA(j)) nach Anspruch 2, wobei
alle Werte der Elemente $f_{p-1}$, ..., $f_0$, die von dem Element $f_b$ verschieden sind, $\beta$ sind und $\beta \neq \alpha$ erfüllt ist.

4. Sichere-Berechnungs-Vorrichtung (PA(j)) nach Anspruch 3, wobei

$i \in \{0, ..., p-1\}$ erfüllt ist, eine Sequenz f eine Bitfolge ist, ein Wert jedes Elements $f_i$ der Elemente $f_{p-1}$, ..., $f_0$ 0 oder 1 ist, $(\alpha, \beta) = (1,0)$ oder $(\alpha, \beta) = (0,1)$ erfüllt ist, die Zufallszahl p ein Element eines Quotientenrings $Z_p$ modulo p ist, der Anteil der Zufallszahl p ein Anteil $sha(\rho)_j$ ist, der durch geheimes Teilen von $\rho \in Z_p$ erhalten wird,
die Rotationseinheit (13-j) die Sequenz pof erhält, die eine Bitfolge ist, die durch Bit-Rotieren der Elemente $f_{p-1}$, ..., $f_0$ in der Sequenz f um p Bits erhalten wird,
der $sha(\rho)_j$ und der $sha(b)_j$ Anteile sind, die durch Geheimnisteilung gemäß einem additiven Geheimnisteilungsverfahren oder einem Duplikat-Geheimnisteilungsverfahren erhalten werden, und
die numerische Anteilsumwandlungseinheit (15-j) $b' - sha(\rho)_j \in Z_p$ als den Anteil $sha(b)_j$ des Werts b erhält.

5. Sichere-Berechnungs-Vorrichtung (PA(j)) nach einem der Ansprüche 2 bis 4, wobei die Zufallszahl p eine einheitliche Zufallszahl ist.

6. Sichere-Berechnungs-Verfahren, das durch eine Sichere-Berechnungs-Vorrichtung implementiert wird, in der p eine ganze Zahl von 2 oder mehr ist, f eine Sequenz von p Elementen $f_{p-1}$, ..., $f_0$ ist, ein Wert eines Elements $f_b$ unter den Elementen $f_{p-1}$, ..., $f_0$ $\alpha$ ist, ein Wert eines anderen Elements als des Elements $f_b$ von $\alpha$ verschieden ist, ein Wert, der eine Position des Elements $f_b$ darstellt, $b \in \{0, ..., p-1\}$ ist, p eine durch eine ganze Zahl dargestellte Zufallszahl ist, wobei das Sichere-Berechnungs-Verfahren Folgendes aufweist:

einen Rotationsschritt (S13-j) des Erhaltens einer Sequenz pof durch Rotieren der Elemente $f_{p-1}$, ..., $f_0$ in der Sequenz f um p Elemente durch sichere Berechnung unter Verwendung eines Anteils der Zufallszahl p und eines Anteils der Sequenz f, ohne die Zufallszahl p und die Sequenz f zu erhalten;
einen Positionsextraktionsschritt (S14-j) des Erhaltens eines Werts $b' E \{0, ..., p-1\}$, der eine Position eines Elements $cf_{b'}$ darstellt, dessen Wert $\alpha$ unter den Elementen $cf_{p-1}$, ..., $cf_0$ in der Sequenz pof ist; und
einen numerischen Anteilsumwandlungsschritt (S15-j) des Erhaltens eines Anteils des Werts b durch sichere Berechnung unter Verwendung des Anteils der Zufallszahl p und des Werts b', wobei ein Anteil von $\chi$ einen Anteil darstellt, welcher der Sichere-Berechnungs-Vorrichtung (PA(j)) unter Anteilen zugewiesen ist, die durch Geheimnisteilung $\chi$ gemäß einem vorbestimmten Geheimnisteilungsverfahren erhalten werden.

7. Programm zum Betreiben eines Computers als die Sichere-Berechnungs-Vorrichtung nach einem der Ansprüche 2 bis 5.

**Revendications**

1. Système de calcul sécurisé (1) dans lequel n est un entier de 2 ou plus, j = 0, ..., n-1, p est un entier de 2 ou plus, f est une séquence de p éléments $f_{p-1}$, ..., $f_0$, une valeur d'un élément $f_b$ parmi les éléments $f_{p-1}$, ..., $f_0$ est $\alpha$, une valeur d'un élément autre que l'élément $f_b$ est autre que $\alpha$, une valeur représentant une position de l'élément $f_b$ est $b \in \{0, ..., p-1\}$, p est un nombre aléatoire représenté par un entier, le système (1) comprenant :

n appareils de calcul sécurisé PA(0), ..., PA(n-1), dans lequel l'appareil de calcul sécurisé PA(j) comprend une unité de rotation (13-j) qui obtient une séquence pof en faisant tourner les éléments $f_{p-1}$, ..., $f_0$ de la séquence f par p éléments par calcul sécurisé en utilisant une part du nombre aléatoire p et une part de la séquence f sans obtenir le nombre aléatoire p et la séquence f,
une unité d'extraction de position (14-j) qui obtient une valeur $b' \in \{0, ..., p-1\}$ représentant une position d'un élément $cf_b$, dont la valeur est $\alpha$ parmi les éléments $cf_{p-1}, ..., cf_0$ dans la séquence pof, et
une unité de conversion de part numérique (15-j) qui obtient une part de la valeur b par calcul sécurisé en utilisant la part du nombre aléatoire p et la valeur b', dans lequel une part de $\chi$ représente une part attribuée à l'appareil de calcul sécurisé PA(j) parmi des parts obtenues par partage de secret $\chi$ selon un procédé de partage de secret prédéterminé.

2. Appareil de calcul sécurisé (PA(j)) dans lequel p est un entier de 2 ou plus, f est une séquence de p éléments $f_{p-1}, ..., f_0$, une valeur d'un élément $f_b$ parmi les éléments $f_{p-1}, ..., f_0$ est $\alpha$, une valeur d'un élément autre que l'élément $f_b$ est une valeur autre que $\alpha$, une valeur représentant une position de l'élément $f_b$ est $b \in \{0, ..., p-1\}$, p est un nombre aléatoire représenté par un entier, l'appareil de calcul sécurisé (PA(j)) comprenant :

une unité de rotation (13-j) qui obtient la séquence pof en faisant tourner les éléments $f_{p-1}, ..., f_0$ dans la séquence f par p éléments par calcul sécurisé en utilisant une part du nombre aléatoire p et une part de la séquence f sans obtenir le nombre aléatoire p et la séquence f,
une unité d'extraction de position (14-j) qui obtient une valeur $b' \in \{0, ..., p-1\}$ représentant une position d'un élément $cf_{b'}$ dans laquelle la valeur est $\alpha$ parmi les éléments $cf_{p-1}, ..., Cf_0$ dans la séquence $\rho \circ f$, et
une unité de conversion de part numérique (15-j) qui obtient une part de la valeur b par calcul sécurisé en utilisant la part du nombre aléatoire p et la valeur b', dans lequel une part de $\chi$ représente une part attribuée à l'appareil de calcul sécurisé (PA(j)) parmi des parts obtenues par partage de secret $\chi$ selon un procédé de partage de secret prédéterminé.

3. Appareil de calcul sécurisé (PA(j)) selon la revendication 2, dans lequel
toutes les valeurs des éléments $f_{p-1}, ..., f_0$ autres que l'élément $f_b$ sont $\beta$ et $\beta \neq \alpha$ est satisfait.

4. Appareil de calcul sécurisé (PA(j)) selon la revendication 3, dans lequel

$i \in \{0, ..., p-1\}$ est satisfait, une séquence f est une chaîne de bits, une valeur de chaque élément $f_i$ des éléments $f_{p-1}, ..., f_0$ est 0 ou 1, $(\alpha, \beta)=(1,0)$ ou $(\alpha, \beta)=(0,1)$ est satisfait, le nombre aléatoire p est un élément d'un anneau de quotient $Z_p$ modulo p, la part du nombre aléatoire p est une part $sha(\rho)_j$ obtenue par partage de secret $\rho \in Z_p$, l'unité de rotation (13-j) obtient la séquence pof, qui est une chaîne de bits obtenue par rotation de bits des éléments $f_{p-1}, ..., f_0$ dans la séquence f par p bits,
la $sha(\rho)_j$ et la $sha(b)_j$ sont des parts obtenues par partage de secret selon un procédé de partage de secret additif ou un procédé de partage de secret en double, et
l'unité de conversion de part numérique (15-j) obtient $b'-sha(\rho)_j \in Z_p$ en tant que part $sha(b)_j$ de la valeur b.

5. Appareil de calcul sécurisé (PA(j)) selon l'une quelconque des revendications 2 à 4, dans lequel le nombre aléatoire p est un nombre aléatoire uniforme.

6. Procédé de calcul sécurisé mis en œuvre par un appareil de calcul sécurisé, dans lequel p est un entier de 2 ou plus, f est une séquence de p éléments $f_{p-1}, ..., f_0$, une valeur d'un élément $f_b$ parmi les éléments $f_{p-1}, ..., f_0$ est $\alpha$, une valeur d'un élément autre que l'élément $f_b$ est une valeur autre que $\alpha$, une valeur représentant une position de l'élément $f_b$ est $b \in \{0, ..., p-1\}$, p est un nombre aléatoire représenté par un entier, le procédé de calcul sécurisé comprenant :

une étape de rotation (S13-j) consistant à obtenir une séquence pof en faisant tourner les éléments $f_{p-1}, ..., f_0$ dans la séquence f par p éléments par calcul sécurisé en utilisant une part du nombre aléatoire p et une part de la séquence f sans obtenir le nombre aléatoire p et la séquence f ;
une étape d'extraction de position (S14-j) consistant à obtenir une valeur $b' \in \{0, ..., p-1\}$ représentant une position d'un élément $cf_{b'}$ dont la valeur est $\alpha$ parmi les éléments $cf_{p-1}, ..., cf_0$ dans la séquence pof ; et
une étape de conversion de part numérique (S15-j) consistant à obtenir une part de la valeur b par calcul sécurisé en utilisant la part du nombre aléatoire p et la valeur b' où une part de $\chi$ représente une part attribuée à l'appareil de calcul sécurisé (PA(j)) parmi des parts obtenues par partage de secret $\chi$ selon un procédé de partage de secret prédéterminé.

7. Programme pour faire fonctionner un ordinateur en tant qu'appareil de calcul sécurisé selon l'une quelconque des revendications 2 à 5.

SECURE COMPUTATION
SYSTEM
1

PA(0)

SECURE
COMPUTATION
APPARATUS

NETWORK

SECURE
COMPUTATION
APPARATUS

· · ·

SECURE
COMPUTATION
APPARATUS

PA(1)

PA(n-1)

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAKASHI NISHIDE** ; **TAKUMA AMADA**. Multiparty Computation for Floating Point Arithmetic with Less Communication over Small Fields. *IPSJ Journal*, 2019, vol. 60 (9), 1433-1447
- Programming Languages for Secure Multiparty Computation Application Development. **RANDMETS, J.** PhD thesis. University of Tartu, 2017
- New Primitives for Actively-Secure MPC over Rings with Applications to Private Machine Learning. **DAMGARD IVAN et al.** 2019 IEEE SYMPOSIUM ON SECURITY AND PRIVACY (SP). IEEE, 19 May 2019, 1102-1120

- **A. SHAMIR**. How to share a secret. *Communications of the ACM*, 1979, vol. 22 (11), 612-613
- **HIROKI HAMADA** ; **DAI IGARASHI** ; **KOJI CHIDA** ; **KATSUMI TAKAHASHI**. Random Permutation Protocol for Three-Party Concealed Function Computation. *CSS2010*, 2010
- Efficient Bit-Decomposition and Modulus-Conversion Protocols with an Honest Majority. **KIKUCHI, R.** ; **IKARASHI, D.** ; **MATSUDA, T.** ; **HAMADA, K.** ; **CHIDA, K.** Information Security and Privacy -23rd Australasian Conference, ACISP 2018, Wollongong, NSW, Australia, July 11-13, 2018, Proceedings. Springer, 2018, vol. 10946, 64-82